**Europäisches Patentamt**

**European Patent Office**

**Office européen des brevets**

(19)

(11) Numéro de publication: **0 246 148**
**B1**

(12) **FASCICULE DE BREVET EUROPEEN**

(45) Date de publication du fascicule du brevet:
**31.01.90**

(51) Int. Cl.⁴: **G01V 1/40**

(21) Numéro de dépôt: **87401056.4**

(22) Date de dépôt: **11.05.87**

(54) Procédé de prospection sismique à très haute résolution en forages horizontaux.

(30) Priorité: **16.05.86 FR 8607031**

(43) Date de publication de la demande:
**19.11.87 Bulletin 87/47**

(45) Mention de la délivrance du brevet:
**31.01.90 Bulletin 90/5**

(84) Etats contractants désignés:
**DE GB NL SE**

(56) Documents cités:
**EP-A- 0 170 582**
**FR-A- 2 431 710**
**FR-A- 2 514 152**

(73) Titulaire: **SOCIETE NATIONALE ELF AQUITAINE
(PRODUCTION), Tour Elf 2, Place de la Coupole La
Défense 6, F-92400 Courbevoie(FR)**

(72) Inventeur: **Staron, Philippe, 9, rue François Barbin,
F-91540 Mennecy(FR)**

(74) Mandataire: **Levy, David et al, c/o S.A.
Fedit-Loriot 38, avenue Hoche, F-75008 Paris(FR)**

ACTORUM AG

## Description

La présente invention concerne un procédé de prospection sismique à très haute résolution en forages horizontaux ou très fortement inclinés.

Dans ce qui suit, on appelle forage horizontal, un forage peu ou pas inclinés ur l'horizontale, un forage fortement incliné ou dévié à partir d'un puits de forage vertical.

De plus en plus, les forages horizontaux sont largement pratiqués notamment dans les gisements d'hydrocarbures en exploitation, de manière à drainer le gisement sur une distance nettement plus considérable que son épaisseur, alors qu'un forage vertical ne draine le gisement qu'à travers son épaisseur. Un forage horizontal recoupe, dans la zone du gisement, des couches géologiques sous un angle faible, ou même, chemine pendant une distance appréciable dans une même couche, de l'ordre de plusieurs centaines de mètres, l'axe dudit forage étant sensiblele parallèle aux limites de ladite couche géologique.

Le forage horizontal foré à partir d'un forage vertical est généralement relativement profond dans le milieu exploité qui comprend des couches stratifiées, superposées et séparées par des interfaces.

L'étude des couches situées au-dessus du forage horizontal et donc traversées par le forage vertical est très importante pour déterminer des informations sur les propriétés lithologiques (compositions chimiques) des roches, sédimentologiques, la fracturation, le contenu en fluide et paramètre pétrophysiques (porosité, perméablité, compressibilité, etc...).

Une telle étude est effectuée au moyen de ce qu'il est usuel d'appeler une diagraphie qui, notamment, peut être du type acoustique. Les grandeurs acoustiques mesurées par un outil de diagraphie acoustique comme celui décrit dans le brevet FR 2 431 710 (Procédé EVA®), sont essentiellement les vitesses et les atténuations des ondes de compression et de cisaillement représentatives de la roche traversée par les trajets acoustiques, et des ondes de Stoneley et ondes pseudo-Rayleigh qui sont représentatives à la fois de la roche traversée et de la géométrie du puits de forage.

La mesure est effectuée par l'émission d'une onde acoustique dans le fluide remplissant le puits de forage vertical, à partir d'une ou plusieurs sources émettrices, et par la réception sur un ou plusieurs récepteurs des ondes de diverses natures provoquées par l'onde émise. Les ondes reçues sur le ou les récepteurs sont converties en des signaux électriques par le ou les récepteurs (par exemple du type piézoélectrique). Les signaux électriques sont remontés en surface par un câble électrique, puis enregistrés de préférence sous forme numérique dans un appareillage d'enregistrement approprié. Les signaux enregistrés sont ensuite traités à l'aide d'un ordinateur, de façon à repérer les arrivées correspondant à chaque type d'onde, notamment de compression et de cisaillement, et à déterminer les caractéristiques intéressantes telles que vitesses de propagation (ou temps d'arrivée), amplitude, période. Divers traitements peuvent être mis en oeuvre pour améliorer la précision et la qualité des mesures à effectuer. Parmi les traitements proposés, on peut citer celui décrit dans le brevet français 81 18 672 (FR-A 2 514 152).

Un caractère particulier de toutes les mesures par diagraphie est qu'elles sont effectuées dans le puits de forage vertical et qu'elles sont relatives à une petite portion d'espace entourant le puits de forage vertical. Cela est vrai pour toutes les diagraphies, acoustiques, électriques, nucléaires, etc...En particulier, pour les diagraphies acoustiques, cela est dû au fait que les trajets des ondes acoustiques sont des trajets du type réfracté. En effet, les ondes émises dans le fluide remplissant le puits de forage vertical se réfractent à la paroi dudit puits, suivent ladite paroi sur une certaine distance, et sont réfractées à nouveau pour atteindre finalement le ou les récepteurs de l'outil de diagraphie.

Les ondes reçues sur le ou les récepteurs sont donc pratiquement celles qui ont suivi un trajet le long de la paroi du puits de forage vertical. En conséquence, une faible partie latérale de la matière de la couche géologique située entre le ou les émetteurs et le ou les récepteurs de l'outil de diagraphie, est concernée par les mesures. Par partie latérale de matière, il faut comprendre l'épaisseur de matière traversée par l'onde acoustique émise, comptée dans une direction sensiblement perpendiculaire à l'axe vertical du puits de forage. Il va de soi que les mesures effectuées concernent avant tout l'épaisseur de la couche géologique, comptée verticalement et donc la portion verticale de couche comprise entre le ou les émetteurs et le oules récepteurs.

En effet, et bien que les ondes acoustiques émises se propagent dans tout le milieu entourant le puits de forage vertical et sur des distances importantes, il a été impossible, sauf dans de rares exceptions dues à des hétérogénéités comme failles, fractures ou dôme de sel par exemple, de recevoir et d'enregistrer des ondes réfléchies.

Les spécialistes appelés de gisement ne pouvaient accéder directement aux informations relatives aux couches géologiques situées en-dessous du forage horizontal. Pour accéder à ces informations, il était nécessaire de procéder à une étude très approximative basée sur des hypothèses de schémas géologiques, des mesures dynamiques (relations pression-débit) dans le forage horizontal ou entre forages (interférences), des mesures sismiques de surface. Malheureusement, ces dernières sont peu sélectives et incertaines en raison d'une part de la présence d'une zone altérée à la surface du sol, et, d'autre part, de la distance importante que doivent parcourir les ondes entre la surface du sol et les couches géologiques très profondes. Indépendamment de la grande quantité d'énergie à produire pour permettre aux ondes de so propager jusqu'aux couches géologiques les plus profondes, il faut noter que la précision des mesures est relativement faible pour la raison que la fréquence utilisée doit être assez basse. En pratique, la précision des mesures est à quelques dizaines de mètres près.

Par ailleurs, les informations relatives aux couches situées au-dessous du forage horizontal sont très difficiles, pour ne pas dire impossibles, à obtenir, en raison due fait que lesdites couches sont trop éloignées due forage pour une diagraphie traditionnelle.

La présente invention a pour but de proposer un nouveau procédé de prospection sismique qui permette de réaliser une véritable sismique de fond avec de multiples avantages pour le spécialiste de gisement.

Le procédé selon l'invention qui est mis en oeuvre dans un forage horizontal est caractérisé en ce qu'il consiste à :
- disposer dans un forage horizontal un outil de mesure dont la longueur est au plus égale à la distance séparant le forage de l'interface d'une zone du milieu la plus éloignée à laquelle on s'intéresse, et comprenant au moins trois transducteurs capables d'émettre et de recevoir ds ondes acoustiques,
- émettre à partir d'au moins un des transducteurs émetteurs des ondes acoustiques dont la longueur d'onde est comprise entre quelques centimètres et quelques mètres,
- recevoir sur le ou les transducteurs récepteurs les ondes réfractées par la paroi dudit forage et par les couches géologiques situées à proximité immédiate dudit forage d'une part, et les ondes réfléchies par les couches géologiques éloignées dudit forage d'autre part,
- enregistrer sous forme de signaux électriques lesdites ondes réfractées et réfléchies,
- enregister les instants d'émission des ondes acoustiques émises,
- traiter les signaux enregistrés de manière à déterminer au moins les vitesses moyennes de propagation des ondes réfractées et réfléchies respectivement,
- réaliser au moins une section temps à partir des signaux correspondant aux ondes réfléchies,
- transformer au moins la section temps en une section profondeur à l'aide des vitesses de propagation moyennes des ondes réfléchies de manière à constituer une section profondeur à partir de laquelle on détermine la position des interfaces situées dans la zone géologique traversée horizontalement par ledit forage.

Un avantage de la présente invention réside dans le fait qu'on obtient réellement un effet de loupe (zoom) dans la partie réservoir du gisement décrivant la géométrie et la constitution des réflecteurs, en épaisseur et en nature, et ceci avec une grande précision.

Un autre avantage du procédé selon l'invention est qu'il permet de déterminer la position des limites supérieures et inférieures des couches voisines du forage horizontal.

Un autre avantage très important du procédé selon l'invention est la possibilité maintenant offerte de réaliser une approche des hétérogénéités des couches géologiques à une échelle variant de quelques centimètres jusqu'à la longueur du drain horizontal, de l'ordre de quelques centaines de mètres.

D'autres avantages et caractéristiques ressortiront mieux à la lecture de la description, donnée à titre indicatif mais non limitatif d'une mise en oeuvre particulière du procédé selon l'invention, ainsi que du dessin annexé sur lequel :

la figure 1 est une représentation schématique partielle d'un puits de forage vertical et d'un forage horizontal,

la figure 2 est une section temps donnant en fonction de l'abscisse curviligne du forage horizontal des temps d'arrivée d'une onde réfractée par la paroi du forage et des ondes réfléchies par des interfaces entourant ledit forage.

Le procédé selon l'invention est mis en oeuvre dans un forage horizontal (1) faiblement incliné sur une horizontale ou fortement incliné par rapport à une verticale, et généralement dévié à partir d'un puits de forage vertical (2) foré dans un milieu (3) dans lequel est repérée une zone (4) susceptible de renfermer ou renfermant un gisement d'hydrocarbures.

Dans le forage horizontal (1) est descendu un outil de mesure, désignée dans son ensemble par la référence 5 et comprenant un ensemble de transducteurs dont certains sont utilisés comme émetteurs et les autres comme récepteurs. De préférence, l'outil de mesure 5 comprend quatre émetteurs $E_1$ à $E_4$ séparés les uns des autres par un intervalle constant et égal, par example, à 0,25m, et douze récepteurs $R_1$ à $R_{12}$ séparés les uns des autres par un intervalle constant égal, par exemple à 1 mètre. L'intervalle entre le dernier émetteur $E_4$ et le premier récepteur $R_1$ est de 1 mètre.

L'outil de mesure (5) est monté à l'extrémité d'un train de tiges (30) relié par des moyens d'entraînement connus et non représentés à une tour de forage (31), pour être déplacé dans le puits vertical (2) et le forage horizontal (1).

Entre le forage horizontal (1) et la surface (9) du milieu (3) se trouvent des couches géologiques stratifiées séparées par des interfaces. Pour des raisons de clarté on n'a représenté que les couches 10 et 11 séparées par les interfaces 12 et 13, la zone 4 du forage horizontal (1) pouvant comprendre également plusieurs couches géologiques superposées. Au-dessous de la zone (4) le milieu (3) est représenté par une seule couche géologique inférieure 14 séparée de la zone (4) par un interface 15.

L'outil (5) a, suivant l'invention, une longueur totale au plus égale à la distance séparant le forage horizontal (1) de l'interface la plus éloignée à laquelle on s'intéresse, par exemple l'interface 13 ou 15.

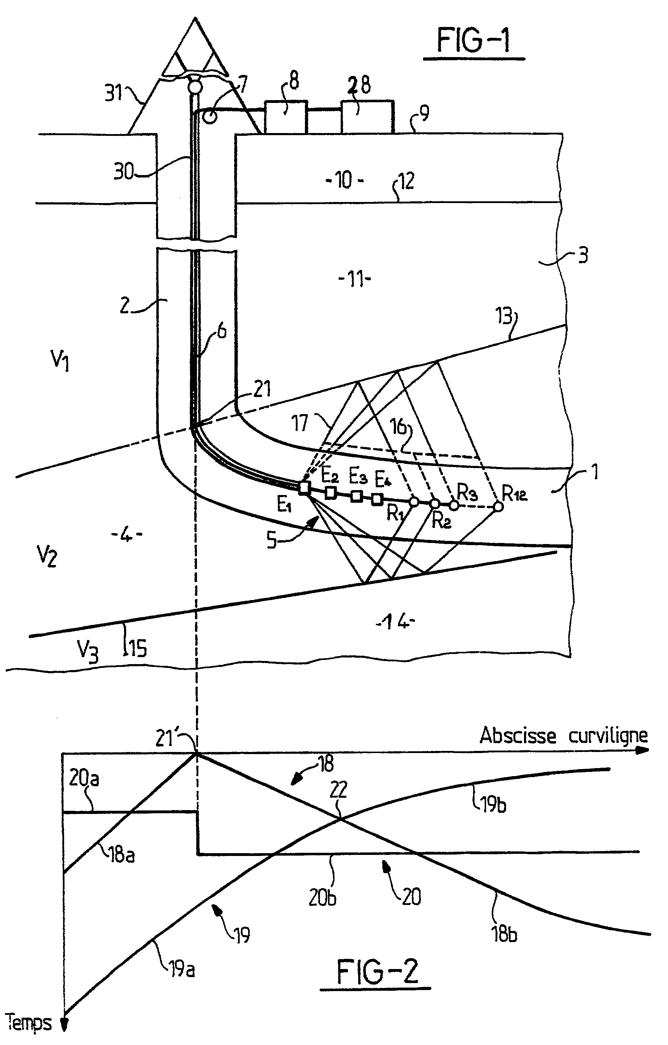

Lorsque l'outil (5) est remonté vers la surface 9 à partir d'une position extrême, sur la droite sur la figure 1, on excite les émetteurs $E_1$ à $E_4$, l'un après l'autre ou quasi-simultanément, de manière à ce que chacun d'eux émette une onde acoustique. Les émetteurs $E_1$ à $E_4$ sont notamment des émetteurs piézo-électriques ou magnétostrictifs. L'onde acoustique émise se propage dans la zone (4) suivant deux types de trajets différents avant d'être reçue sur chacun des récepteurs $R_1$ à $R_{12}$.

Le premier type de trajet 16, représenté en pointillé, correspond à une réfraction le long de la paroi du forage horizontal (1) par la couche géologique située à proximité immédiate dudit forage horizontal. Le deuxième type de trajet 17, représenté en trait plein, correspond à une réflexion de l'onde émise par l'interface 13, par exemple.

Pour des raisons de simplification, seuls quelques trajets par réfraction et par réflexion ont été représentés. De même, il n'a pas paru nécessaire de représenter la réfraction le long du forage horizontal (1) du côté de la réflexion sur l'interface 15.

Les ondes réfractées et réfléchies sont reçues sur les récepteurs $R_1$ à $R_{12}$ du type piézoélectriques qui comprennent des moyens aptes à les transformer en signaux électriques, lesquels sont remontés par un câble 6 logé dans le train de tiges 30 et s'enroulant autour d'une poulie (7), vers des moyens d'enregistrement représentés schématiquement par un bloc diagramme (8). L'enregistrement des signaux est réalisé de préférence sous forme numérique de manière à pouvoir être traités par des moyens informatiques représentés schématiquement par un bloc diagramme (28).

Les émissions des ondes acoustiques se succèdent à des intervalles réguliers qui peuvent être supérieurs ou non à la durée d'écoute, ceci étant fonction du type du signal émis. Par exemple, les émissions se succèdent toutes les 70ms ce qui correspond à un pas d'avancement de l'outil de mesure (5) de l'ordre de 8mm, chaque instant d'émission étant enregistré sur les moyens (8). De même la longueur d'onde des ondes acoustiques émises est comprise entre quelques centimètres et quelques mètres, et de préférence, comprise entre 15 et 75cm.

Les signaux électriques enregistrés sous forme de traces sont ensuite traités pour que le résultat final du traitement produise des informations relatives aux ondes réfractées d'une part, et des informations relatives aux ondes réfléchies d'autre part.

Comme on a enregistré les instants d'émission et qu'on repère le couple émetteur-récepteur qui a donné naissance à chaque trace, on peut, en utilisant les traitements particuliers décrit dans les brevets français 2 514 152 et EP 0 170 582 et à partir des traces enregistrées, mesurer les paramètres des ondes de compression, de cisaillement, de boue, et autres paramètres telles qu'amplitude, atténuation, période et temps de transit (vitesse), relatifs à la couche géologique entourant le forage horizontal (1) et située à proximité immédiate de ce dernier, informations qui sont nécessaires pour une meilleure exploitation du gisement. Le contenu des brevets FR-A 2 514 152 et EP-A 0 170 582 est inclus dans la présente description. Grâce à un tel traitement, on détermine les vitesses moyennes de propagation des ondes réfractées dans la couche entourant le forage horizontal. La courbe (20) de la figure 2 représente l'arrivée d'une onde de compression P réfractée. à partir de laquelle on peut déduire la vitesse locale de propagation le long du forage horizontal. Le changement de temps et donc de vitesse intervenant entre la partie supérieure 20a et la partie inférieure 20b de la courbe 20 correspond au passage du forage horizontal (1) de la zone (4) à la couche géologique (3) dans lesquelles les vitesses de propagation des ondes sont différentes et respectivement égales à $V_2$ et $V_1$ avec $V_2 < V_1$. La traversée de l'interface (13) est symboliquement représentée par le point 21.

Les traces sont traitées de manière à déterminer également les vitesses moyennes des ondes réfléchies ainsi qu'é réaliser une section image-temps, après correction statique et dynamique, similaire à celle qui est représentée schématiquement sur la figure 2 par les courbes (18) et (19).

La section image-temps à partir des traces enregistrées est effectuée de la manière suivante :

- on regroupe les traces enregistrées en fonction des points miroirs communs appartenant à des interfaces différents mais alignés sur une même médiatrice du segment émetteur-récepteur ayant produit chacune des traces regroupées;
- on applique une suite de corrections dynamiques différentes pour différentes vitesses comprises entre deux limites prédéterminées à l'avance, entre lesquelles devrait se trouver la vitesse moyenne de propagation dans le milieu. Pour chaque vitesse, on fait la somme des traces corrigées relatives à la ligne de points miroirs communs, puis on sélectionne, pour chaque temps, la vitesse qui a donné. à ce temps là, la trace somme ayant la plus grande énergie;
- on construit alors une loi de vitesse qui représente la vitesse moyenne de propagation dans le milieu et ce, pour chacun des groupements des traces à points miroirs communs;
- on effectue pour chacune des traces d'un même groupement, une correction dynamique en utilisant la loi de vitesse déterminée pour ledit groupement;
- on additionne toutes les traces corrigées d'un même groupement pour obtenir une trace somme par groupement; et
- on juxtapose en fonction du temps, les traces sommes de tous les groupements.

La représentation de toutes ces traces sommes juxtaposées donne la section temps en couverture multiple.

Les courbes 18 et 19 sur la figure 2 représentent les abscisses curvilignes en fonction du temps des maxima d'énergie des traces sommes de la section temps correspondant aux réflexions sur les interfaces (13) et (15).

La courbe (18) comprend une partie ascendante (18a) qui correspond à un rapprochement du forage (1) par rapport à l'interface (13) et une partie descendante (18b) qui correspond à un éloignement du même forage (1) par rapport à l'interface (13) lorsqu'on parcourt l'abscisse curviligne du forage horizontal (1). La position de l'interface (15) par rapport au forage horizontal (1) est donnée par la courbe (19) qui montre que le forage horizontal (1) se rapproche constamment de l'interface (15) lorqu'on parcourt l'abscisse curviligne du forage (1).

A l'abscisse curviligne 21' correspondant au point 21, le forage (1) traverse l'interface (13) ce qui se traduit par un temps nul pour l'arrivée réfléchie de la courbe (18).

L'intersection 22 ds courbes 18 et 19 correspond à la partie du forage horizontal (1) équidistante des interfaces 13 et 15.

La transformation de la section de la figure 2 en une section profondeur est effectuée à l'aide des vitesses moyennes déterminées lors ds traitements relatifs aux ondes réfractées et/ou réfléchies. En fait, la section profondeur comprend deux courbes similaires aux courbes 18 et 19 décalées d'un certain facteur correspondant aux vitesses $V_1$ et $V_{23}$ mesurées. C'est la raison pour laquelle, la section profondeur n'a pas été représentée et la détermination de la position des interfaces (13) et (15) délimitant la zone (4), est effectuée sur la section profondeur plutôt que sur la section temps.

Il est à notre que le procédé selon l'invention permet de surmonter l'obstacle de ce qu'il est convenu d'appeler en sismique de surface la profondeur de pénétration qui est la profondeur au-delà de laquelle les propriétés des formations n'ont plus d'incidence significative sur les mesures ou les enregistrements, ou au-delà de laquelle les réflexions ne peuvent être pointées avec quelque sécurité. En effet, cette profondeur, en sismique réflexion, dépend notamment de l'atténuation des ondes sismiques dans les formation ou couches géologiques, de la puissance de l'émission mais aussi de la puissance relative des bruits qui diminuent le rapport signal sur bruit au fur et à mesure que l'amplitute du signal émis décroit. Malgré tous les efforts tant pour mieux filtrer les bruits que lors du traitement ou l'on filtre en fréquence, il subsiste des bruits de différentes origines (bruits d'émission et bruits résiduels après traitement) et le niveau de ces bruits croît avec la profondeur (et le temps).

Les variations du signal émis et du bruit concourant à une diminution du rapport signal sur bruit en fonction de la profondeur jusqu'à une valeur limite qui est la profondeur de pénétration, on conçoit aisément pourquoi les procédés sismiques classiques ne peuvent convenir ou être utilisés pour des forages horizontaux.

Au contraire, le procédé selon l'invention permet d'avoir un excellent rapport signal sur bruit puisque les bruits organisés de surface n'affectent nullement les mesures et que le bruit des sources émettrices est tres attenué puisque l'outil de mesure utilisé travaille à des fréquences entre 5.000 et 10.000 Hz. De plus, l'utilisation de ces fréquences élevées améliore davantage la précision du positionnenent des limites de la zone (4) par rapport au forage horizontal, précision qui dépend de la longueur d'onde utilisée qui, dans le cas des fréquences indiquées sera de l'ordre du mètre et même inférieure au mètre.

Dans ce qui précède, ona fait référence à un outil de mesure qaui est déplacé dans le forage horizontal. Le déplacement peut être effectué de façon continue avec une vitesse de l'ordre de 7 m/mn et enregistrement des instants d'émission se produisant toutes les 70 ms. On pourrait également déplacer l'outil de mesure de façon discontinue c'est-à-dire de l'arrêter à chaque émission en faisant varier ou non le pas d'avancement. Dans un déplacement à pas d'avancement constant, l'outil de mesure peut être déplacé de façon que chaque émetteur soit amené à occuper la position de l'émetteur qui le précédait. Les enregistrements des trajets acoustiques des ondes réfractées peuvent être également regroupés par paires, de manière à pouvoir être traités suivant l'un des traitements décrits dans les brevets cités. Les ondes émises sont produites par des impulsions émises à des instants donnés et régulièrement espacés dans le temps, ou liés aux cotes profondeurs de l'outil dans le forage.

Une autre manière de créer les ondes acoustiques émises serait d'émettre des impulsions suivant un code aléatoire prédétermine, par exemple du type de ceux connus sous les dénominations SOSIE® et SEISCODE® et décrits dans les brevets FR 1 583 239 et 2 123 839, l'enregistrement des instants d'émission permettant une corrélation des enregistrements avec la suite des instants d'émission.

On peut également, et c'est un des objets de l'invention, obtenir des sections sismiques en couverture simple par utilisation d'un seul émetteur et d'un seul récepteur, ou en couverture multiple par le fait qu'on a quatre émetteurs et douze récepteurs et donc quarante huit traces disponibles, la couverture multiple améliorant très sensiblement le rapport signal sur bruit mesuré.

Lorsque la couverture multiple est utilisée, on obtient de plus une estimation de la vitesse moyenne de propagation dans une direction différente de celle du forage horizontal et sans que la mesure ne soit perturbée par les opérations de forage et par le fluide remplissant ledit forage, perturbations qui ne manqueraient pas de se produire si les mesures étaient effectuées sur les seules couches immédiates entourant le forage horizontal.

Une difficulté peut apparaître quand un horizon non continu est vu sur la section, difficulté qui est liée au repérage de l'origine d'un tel horizon. Dans ce case, on peut s'aider des mesures faites au préalable par les procédés classiques. Si l'horizon s'éloigne du forage horizontal lorsque ce dernier remonte légèrement, c'est qu'il est situé au-dessous dudit forage, et inversement on peut également repérer sur la section sismique l'évolution de la distance au forage comparée au profil dudit forage. En particulier, tous les interfaces que le forage traverse dans sa partie oblique, donnent lieu à des réflxions dont la distance au forage est nulle justement au point où le forage horizontal les intersecte. C'est ainsi que les interfaces situés sous le forage horizontal sont repérés par le fait que leur distance au forage horizontal, mesurée sur la section sismique, diminue lorsque la profondeur de l'outil de mesure augmente dans la partie oblique du forage horizontal.

Dans des couches relativement minces, il peut y avoir une propagation d'ondes guidées ou d'ondes de paroi, qui peuvent être facilement mises en évidence par le procédé selon l'invention, et fournir des inforamtions intéressantes sur les couches en question.

Enfin il est à noter que le procédé selon l'invention est applicable en puits tubés, malgré les signaux parasites qui proviennent du tubage. En effet, les signaux parasites qui sont du type réfractés sont sans influence notable sur le traitement relatif aux ondes réfléchies. De plus, ils arrivent beaucoup plus tôt que les signaux réfléchis et ont un contenu en fréquences nettement plus élevé que ces derniers, ce qui en facilite l'élimination.

Le procédé, selon l'invention, outre l'effet de loupe (zoom) qu'il permet, comme on vient de le décrire, dans la partie gisement par un repérage précis de la géométrie et de la constitution des réflecteurs tant en épaisseur qu'en nature, autorise maintenant une approche des hétérogénéités à une échelle variant entre quelques centimètres et plusieurs centaines de mètres.

## Revendications

1. - Procédé de prospection sismique à très haute résolution en forages horizontaux forés dans un milieu (3) géologique comprenant des couches stratifiées (10,11,4,14) séparées par des interfaces (12,13,15) caractérisé en ce qu'il consiste à :
- disposer dans un forage horizontal (1) un outil de mesure (5) dont la longueur est au plus égale à la distance séparant le forage (1) de l'interface (13 ou 15) d'une zone (4) du milieu la plus éloignée à laquelle on s'intéresse, et comprenant au moins trois transducteurs capables d'émettre et de recevoir des ondes acoustiques,
- émettre à partir d'au moins un des transducteurs émetteurs ($E_1$ à $E_4$) des ondes acoustiques dont la longueur d'onde est comprise entre quelques centimètres et quelques mètres,
- recevoir sur le ou les transducteurs récepteurs ($R_1$ à $R_{12}$) les ondes réfractées par la paroi dudit forage et par les couches géologiques situées à proximité immédiate dudit forage d'une part, et les ondes réfléchies par les couches géologiques éloignées dudit forage d'autre part,
- enregistrer sous forme de signaux électriques lesdites ondes réfractées et réfléchies,
- enregistrer les instants d'émission des ondes acoustiques émises,
- traiter les signaux enregistrés de manière à déterminer au moins les vitesses moyennes de propagation des ondes réfractées et réfléchies respectivement,
- réaliser au moins une section temps à partir des signaux correspondant aux ondes réfléchies,
- transformer au moins la section temps en une section profondeur à l'aide des vitesses de propagation moyennes des ondes réfléchies de manière à constituer une section profondeur à partir de laquelle on détermine la position des interfaces situées dans la zone géologique traversée horizontalement par ledit forage.

2. - Procédé selon la revendication 1, caractérisé en ce que la longueur d'onde est comprise entre 5cm et 3m.

3. Procédé selon la revendication 1, caractérisé en ce que les ondes mises sont produites par des signaux impulsionnels, chaque émission ayant une durée supérieure au temps d'écoute.

4. Procédé selon la revendication 1, caractérisé en ce que les émissions sont réalisées suivant un code prédéterminé, et en ce que le traitement des signaux enregistrés comprend une étape de corrélation des signaux réfléchis avec la suite des instants d'émission.

5. Procédé selon la revendication 1, caractérisé en ce que l'outil de mesure comprend quatre émetteurs et douze récepteurs, la distance séparant les émetteurs entre eux étant inférieure à la distance séparant les récepteurs entre eux.

6. Procédé selon l'une des revendications 1 ou 2, caractérisé en ce que la longuer d'onde est comprise entre 15 et 75cm.

7. - Procédé selon la revendication 1, caractérisé en ce que l'outil de mesure est déplacé de façon continue dans le forage.

8. - Procédé selon la revendication 1, caractérisé en ce que l'outil de mesure est déplacé de façon discontinue dans le forage.

## Patentansprüche

1. Verfahren zur seismischen Prospektion mit sehr hoher Auflösung für horizontale Bohrlöcher, die in einem geologischen Milieu (3) gebohrt sind, das geschichtete Lagen (10, 11, 4, 14) aufweist, die durch Grenzflächen (12, 13, 15) voneinander getrennt sind, gekennzeichnet durch:
— Einbringen eines Meßwerkzeugs (5) in eine horizontale Bohrung (1), dessen Länge kleiner oder gleich dem Abstand ist der die Bohrung (1) von der Grenzfläche (13 oder 15) eines Bereiches (4) des Milieus trennt, der von Interesse und am weitesten entfernt ist, und wobei das Meßwerkzeug mindestens drei Wandler aufweist, die akustische Wellen senden und empfangen können,
— Senden von akustischen Wellen, ausgehend von mindestens einer der Sendewandler ($E_1$ bis $E_4$), wobei die Wellenlänge zwischen einigen Zentimetern und einigen Metern liegt,
— Empfangen durch den oder die Empfängerwandler ($R_1$ bis $R_{12}$), von den durch die Wandung der Bohrung und durch geologische Schichten, die in der unmittelbaren Nähe dieser Bohrung gelegen sind, gebrochenen Wellen einerseits und der an von der Bohrung entfernten geologischen Schichten reflektierten Wellen andererseits,
— Registrieren der gebrochenen und reflektierten Wellen in Form von elektrischen Signalen,
— Registrieren der Zeitpunkte des Aussendens der gesendeten akustischen Wellen,
— Verarbeiten der registrierten Signale derart, daß mindestens die mittleren Fortpflanzungsgeschwindigkeiten der gebrochenen und reflektierten Wellen bestimmt werden,
— Erstellung mindestens eines Zeitabschnitts, ausgehend von Signalen, die reflektierten Wellen entsprechen, und
— Umrechnen mindestens eines Zeitabschnitts in einen Tiefenabschnitt mittels der mittleren Fortpflanzungsgeschwindigkeiten der reflektierten Wellen derart, daß ein Tiefenabschnitt gebildet wird, ausgehend von dem die Lage der Grenzflächen bestimmt wird, die im geologischen Bereich liegt, die horizontal durch die Bohrung durchquert wird.

2. Verfahren nach Anspruch 1, dadurch gekennzeichnet, daß die Wellenlänge zwischen 5 cm und 3 m liegt.

3. Verfahren nach Anspruch 1, dadurch gekennzeichnet, daß die gesendeten Wellen durch Impulssignale erzeugt werden, wobei jede Emission eine längere Dauer hat als die Hörzeit.

4. Verfahren nach Anspruch 1, dadurch gekennzeichnet, daß die Emissionen mittels eines vorbestimmten Codes erfolgen und dadurch, daß die Verarbeitung der registrierten Signale einen Schritt aufweist, bei dem die reflektierten Signale mit der Folge der Emissionszeitpunkte korreliert wird.

5. Verfahren nach Anspruch 1, dadurch gekennzeichnet, daß das Meßwerkzeug 4 Sender und 12 Empfänger aufweist, wobei der Abstand, der die Sender untereinander trennt, kleiner als der Abstand ist, mit dem die Empfänger voneinander getrennt sind.

6. Verfahren nach einem der Ansprüche 1 oder 2, dadurch gekennzeichnet, daß die Wellenlänge zwischen 15 und 75 cm liegt.

7. Verfahren nach Anspruch 1, dadurch gekennzeichnet, daß das Meßwerkzeug gleichförmig in der Bohrung bewegt wird.

8. Verfahren nach Anspruch 1, dadurch gekennzeichnet, daß das Meßwerkzeug diskontinuierlich in der Bohrung bewegt wird.

**Claims**

1. A method of seismic prospecting with very high resolution in horizontal boreholes drilled in a geological medium formed of stratified layers separated by interfaces, characterized in that the method involves the following steps:
   - a measuring tool which is constituted by at least three transducers for transmitting and receiving acoustic waves and which has a length equal at a maximum to the distance between the borehole and the most distant interface of interest of a zone of the medium is placed within a horizontal borehole;
   - acoustic waves are generated by at least one of the transmitting transducers, the wavelength of said acoustic waves being within the range of a few centimeters to a few meters;
   - the receiving transducer or transducers receive on the one hand the waves refracted from the borehole wall and from the geological strata located in the immediate vicinity of said borehole and on the other hand the waves reflected from the geological strata located at a distance from said borehole;
   - said refracted waves and reflected waves are recorded in the form of electrical signals;
   - the instants of generation of the transmitted acoustic waves are recorded;
   - the recorded signals are processed in order to determine at least the average propagation velocities of the refracted waves and reflected waves respectively;
   - at least one time-section is determined from the signals corresponding to the reflected waves;
   - at least the time-section is converted to a depth-section by means of the average propagation velocities of the reflected waves so as to constitute a depth-section from which is determined the position of the interfaces located within the geological zone traversed horizontally by said borehole.

2. A method in accordance with claim 1, characterized in that the wavelength is within the range of 5 centimeters to 3 meters.

3. A method in accordance with claim 1, characterized in that the transmitted waves are produced by pulsed signals, the time-duration of each transmission being longer than the listening time.

4. A method in accordance with claim 1, characterized in that the transmissions are carried out in accordance with a predetermined code and that processing of recorded signals includes a step of correlation of reflected signals with the sequence of shot moments.

5. A method in accordance with claim 1, characterized in that the measuring tool is constituted by four transmitters and twelve receivers, the distance between the transmitters being shorter than the distance between the receivers.

6. A method in accordance with claim 1 or claim 2, characterized in that the wavelength is within the range of 15 to 75 centimeters.

7. A method in accordance with claim 1, characterized in that the measuring tool is displaced continuously within the borehole.

8. A method in accordance with claim 1, characterized in that the measuring tool is displaced in a noncontinuous manner within the borehole.

EP 0 246 148 B1

FIG-1

FIG-2